# EUROPEAN PATENT SPECIFICATION

(11) **EP 4 005 403 B1**
(45) Date of publication and mention of the grant of the patent: **27.12.2023**
(21) Application number: 19938433.0
(22) Date of filing: 24.07.2019
(51) Int. Cl.: A23L 29/30, A23L 29/231, A23L 29/269

(54) **SUGAR SYRUP COMPOSITION**
ZUCKERSIRUPZUSAMMENSETZUNG
COMPOSITION DE SIROP DE SUCRE

(43) Date of publication of application: 01.06.2022
(73) Proprietor: Samyang Corporation, Jongno-gu Seoul 03129 (KR)
(72) Inventor: JOO, Kyung Ho, Seoul 06563 (KR); KIM, Kwang Soo, Seongnam-si Gyeonggi-do 13614 (KR)
(74) Representative: Schön, Christoph
(86) International application number: PCT/KR2019/009194
(87) International publication number: WO 2021/015344

(56) References cited:
- EP-A1- 3 427 601
- JP-A- S62 100 253
- KR-A- 20170 105 451
- KR-A- 20180 035 413
- KR-A- 20180 046 853
- KR-A- 20180 102 042

## Description

### [Technical field]

The present invention relates to a saccharide syrup composition, specifically a saccharide syrup composition satisfying specific physical properties and a manufacturing method thereof.

### [Technical art]

As one of the measures to solve geriatric diseases and obesity, which are recently becoming global problems, various policies are being implemented in many countries including Korea to reduce the sugar intake of their own people. The saccharide reduction means that the content of monosaccharides and disaccharides, such as glucose, fructose, and sucrose, which are known to increase the risk of obesity, diabetes, cardiovascular disease, and other various adult diseases when consumed in excess, is lowered, unless otherwise "saccharide" does not include rare sugars such as allulose.

Specifically, excessive consumption of sugar is pointed out as a major cause of various lifestyle-related diseases such as obesity and diabetes as well as tooth decay, and the need to develop an alternative sweetener is emerging worldwide. Recently, various sweetening materials have been developed.

Although allulose is attracting attention as one of the materials for saccharide reduction, allulose has a low viscosity and difficulty to satisfy consumer demand for conventional syrup products, especially use convenience and the like. Thus, allulose products with various properties have been developed.

EP 3 427 601 A1 discloses a syrup composition comprising: gum, pectin, or a combination thereof, and allulose, as well as food containing the composition.

### [DISCLOSURE]

### [Technical problem]

The present invention is to provide a saccharide syrup composition having a specific viscosity range, while containing a small amount of a thickening agent.

In addition, the present invention is to provide a method for preparing a saccharide syrup composition having a specific viscosity range, while containing a small amount of a thickening agent.

### [Technical solution]

The present invention provides a saccharide syrup composition having a specific viscosity range and containing a low content of a thickening agent as defined in claim 1, and a method for preparing the same as defined in claim 14.

The saccharide syrup composition according to the present invention includes allulose and a thickening agent, wherein the thickening agent includes pectin and xanthan gum. The allulose may be syrup, crystalline powder or amorphous powder.

When the saccharide syrup composition according to the present invention is prepared with allulose syrup, the raw saccharide syrup may be allulose syrup containing allulose, or saccharide syrup added with oligosaccharides to allulose syrup. When the allulose content is high, the flowability increases and the viscosity decreases. Thus, it is difficult to meet consumer convenience for use and requirements.

The saccharide syrup composition according to the present invention is to achieve a predetermined viscosity condition, while using a small amount of thickening agent, and includes allulose and thickening agent, wherein the thickening agent includes pectin and xanthan gum.

The saccharide syrup composition according to a further embodiment of the present invention may include allulose, and pectin and xanthan gum as a thickening agent, and optionally at least one selected from the group consisting of a dispersing agent of the thickening agent and calcium lactate.

The saccharide syrup composition according to the present invention has a viscosity measured at 25°C of 500cp to 3,000 cp, 500cp to 2,500 cp, 500cp to 2,000 cp, 500cp to 1,500cp, 500 cp to 1,400 cp, 500 cp to 1,300 cp, 500 cp to 1,200 cp, 500 cp to 1,100 cp, 500 cp to 1,000 cp, 500 cp to 970 cp, 530cp to 1,500cp, 530 cp to 1,400 cp, 530 cp to 1,300 cp, 530 cp to 1,200 cp, 530 cp to 1,100 cp , 530 cp to 1,000 cp, or 530 cp to 970 cp. The viscosity unit may be expressed as cP (centipoise) or cps, and has the same meaning (1cP = 1 mPa.s).

In addition, as a result of performing a storage experiment for 2 weeks based on the allulose content under various temperature conditions (e.g., 25 °C, 35 °C, or 45 °C), the syrup composition according to the present invention has increased storage stability, when a combination of two or more selected from pectin, xanthan gum, and calcium lactate was used, the reduced content of allulose with storage time is smaller than that single thickening agent. Therefore, the saccharide syrup with excellent storage stability of allulose is provided.

The saccharide syrup composition according to the present invention includes allulose and a thickening agent which includes pectin and xanthan gum. The allulose may be syrup, crystalline powder or amorphous powder.

Particularly, the amount of allulose contained in the saccharide syrup, based on saccharide syrup composition of 100 percent by weight, may be 50 to 80 percent by weight, 50 to 78 percent by weight, 50 to 76 percent by weight, 50 to 75 percent by weight, 50 to 74 percent by weight, 55 to 80 percent by weight, 55 to 78 percent by weight, 55 to 76 percent by weight, 55 to 75 percent by weight, 55 to 74 percent by weight, 60 to 80 percent by weight, 60 to 78 percent by weight, 60 to 76 percent by weight, 60 to 75 percent by weight, 60 to 74 percent by weight, 62 to 80 percent by weight, 62 to 78 percent by weight, 62 to 76 percent by weight, 62 to 75 percent by weight, 62 to 74 percent by weight, 63 to 80 percent by weight, 63 to 78 percent by weight, 63 to 76 percent by weight, 63 to 75 percent by weight, 63 to 74 percent by weight, 64.5 to 80 percent by weight, 64.5 to 78 percent by weight, 64.5 to 76 percent by weight, 64.5 to 75 percent by weight or 64.5 to 74 percent by weight.

In addition, the amount of allulose contained in the saccharide syrup, based on 100 percent by weight of solid content in saccharide syrup composition, may be 99.95 percent by weight or lower 99.9 percent by weight or lower, 99.8 percent by weight or lower, 99.7 percent by weight or lower, 99.6 percent by weight or lower, 99.5 percent by weight or lower, 99.0 percent by weight or lower, 98.5 percent by weight or lower, 98.0 percent by weight or lower, or 5 percent by weight or higher, 10 percent by weight or higher, 20 percent by weight or higher, 30 percent by weight or higher, 40 percent by weight or higher, 50 percent by weight or higher, 60 percent by weight or higher, 70 percent by weight or higher, 80 percent by weight or higher, 85 percent by weight or higher, 90 percent by weight or higher, 91 percent by weight or higher, 92 percent by weight or higher, 93 percent by weight or higher, 94 percent by weight or higher, 95 percent by weight or higher, 96 percent by weight or higher, or 96.5 percent by weight or higher, or may be a content range according to a combination of the upper limit and the lower limit. For example, the amount of allulose may be, based on 100 percent by weight of the solid content of saccharide syrup composition, 5 to 99.95 percent by weight, 5 to 99.9 percent by weight, 5 to 99.8 percent by weight, 5 to 99.7 percent by weight, 5 to 99.6 percent by weight, 5 to 99.5 percent by weight, 5 to 99.0 percent by weight, 5 to 98.5 percent by weight, 5 to 98 percent by weight, 5 to 97 percent by weight, 5 to 95 percent by weight, 5 to 94 percent by weight, 5 to 93 percent by weight, 5 to 92 percent by weight, 5 to 91 percent by weight, 5 to 90 percent by weight, 5 to 87 percent by weight, 5 to 85 percent by weight, 5 to 80 percent by weight, 10 to 100 percent by weight, 10 to 99.9 percent by weight, 10 to 99.8 percent by weight, 10 to 99.7 percent by weight, 10 to 99.6 percent by weight, 10 to 99.5 percent by weight, 10 to 99.0 percent by weight, 10 to 98.5 percent by weight, 10 to 98 percent by weight, 10 to 97 percent by weight, 10 to 95 percent by weight, 10 to 94 percent by weight, 10 to 93 percent by weight, 10 to 92 percent by weight, 10 to 91 percent by weight, 10 to 90 percent by weight, 10 to 87 percent by weight, 10 to 85 percent by weight, 10 to 80 percent by weight, 80 percent by weight to 100 percent by weight, 80 percent by weight to 99.9 percent by weight, 80 percent by weight to 99.5 percent by weight, 80 percent by weight to 99 percent by weight, 80 percent by weight to 98.5 percent by weight, 85 percent by weight to 100 percent by weight, 85 percent by weight to 99.9 percent by weight, 85 percent by weight to 99.5 percent by weight, 85 percent by weight to 99 percent by weight, 85 percent by weight to 98.5 percent by weight, 90 percent by weight to 100 percent by weight, 90 percent by weight to 99.9 percent by weight, 90 percent by weight to 99.5 percent by weight, 90 percent by weight to 99 percent by weight, 90 percent by weight to 98.5 percent by weight, 91 percent by weight to 100 percent by weight, 91 percent by weight to 99.9 percent by weight, 91 percent by weight to 99.5 percent by weight, 91 percent by weight to 99 percent by weight, 91 percent by weight to 98.5 percent by weight, 92 percent by weight to 100 percent by weight, 92 percent by weight to 99.9 percent by weight, 92 percent by weight to 99.5 percent by weight, 92 percent by weight to 99 percent by weight, 93 percent by weight to 98.5 percent by weight, 93 percent by weight to 100 percent by weight, 93 percent by weight to 99.9 percent by weight, 93 percent by weight to 99.5 percent by weight, 93 percent by weight to 99 percent by weight, 93 percent by weight to 98.5 percent by weight, 94 percent by weight to 100 percent by weight, 94 percent by weight to 99.9 percent by weight, 94 to 99.5 percent by weight, 94 to 99 percent by weight, or 94 to 98.5 percent by weight.

When the saccharide syrup composition according to the present invention is prepared with allulose syrup, the raw saccharide syrup may be allulose syrup containing allulose, or saccharide syrup added with oligosaccharides to allulose syrup. Based on 100 percent by weight of solid content in the raw saccharide syrup, the amount of allulose may be 100%, 99.9 percent by weight or lower, 99.8 percent by weight or lower, 99.7 percent by weight or lower, 99.6 percent by weight or lower, 99.5 percent by weight or lower, 99.0 percent by weight or lower, 98.5 percent by weight or lower, 98 percent by weight or lower, 97 percent by weight or lower, 95 percent by weight or lower, 94 percent by weight or lower, 93 percent by weight or lower, 92 percent by weight or lower, 91 percent by weight or lower, 90 percent by weight or lower, 87 percent by weight or lower, 85 percent by weight or lower, or 80 percent by weight or lower; or 5 percent by weight or higher, 10 percent by weight or higher, 20 percent by weight or higher, 30 percent by weight or higher, 40 percent by weight or higher, 50 percent by weight or higher, 60 percent by weight or higher, 70 percent by weight or higher, 80 percent by weight or higher, 85 percent by weight or higher, 90 percent by weight or higher, 91 percent by weight or higher, 92 percent by weight or higher, 93 percent by weight or higher, 94 percent by weight or higher, 95 percent by weight or higher, 96 percent by weight or higher, or 96.5 percent by weight or higher; or may be a content range according to a combination of the upper limit and the lower limit.

Based on 100 percent by weight of solid content in the raw saccharide syrup, the amount of allulose in the raw saccharide syrup may be, for examples, 5 to 100 percent by weight, 5 to 99.9 percent by weight, 5 to 99.8 percent by weight, 5 to 99.7 percent by weight, 5 to 99.6 percent by weight, 5 to 99.5 percent by weight, 5 to 99.0 percent by weight, 5 to 98.5 percent by weight, 5 to 98 percent by weight, 5 to 97 percent by weight, 5 to 95 percent by weight, 5 to 94 percent by weight, 5 to 93 percent by weight, 5 to 92 percent by weight, 5 to 91 percent by weight, 5 to 90 percent by weight, 5 to 87 percent by weight, 5 to 85 percent by weight, or 5 to 80 percent by weight, 10 to 100 percent by weight, 10 to 99.9 percent by weight, 10 to 99.8 percent by weight, 10 to 99.7 percent by weight, 10 to 99.6 percent by weight, 10 to 99.5 percent by weight, 10 to 99.0 percent by weight, 10 to 98.5 percent by weight, 10 to 98 percent by weight, 10 to 97 percent by weight, 10 to 95 percent by weight, 10 to 94 percent by weight, 10 to 93 percent by weight, 10 to 92 percent by weight, 10 to 91 percent by weight, 10 to 90 percent by weight, 10 to 87 percent by weight, 10 to 85 percent by weight, 10 to 80 percent by weight, 80 to 100 percent by weight, 80 to 99.9 percent by weight, 80 to 99.5 percent by weight, 80 to 99 percent by weight, 80 to 98.5 percent by weight, 85 to 100 percent by weight, 85 to 99.9 percent by weight, 85 to 99.5 percent by weight, 85 to 99 percent by weight, 85 to 98.5 percent by weight, 90 to 100 percent by weight, 90 to 99.9 percent by weight, 90 to 99.5 percent by weight, 90 to 99 percent by weight, 90 to 98.5 percent by weight, 91 to 100 percent by weight, 91 to 99.9 percent by weight, 91 to 99.5 percent by weight, 91 to 99 percent by weight, 91 to 98.5 percent by weight, 92 to 100 percent by weight, 92 to 99.9 percent by weight, 92 to 99.5 percent by weight, 92 to 99 percent by weight, 93 to 98.5 percent by weight, 93 to 100 percent by weight, 93 to 99.9 percent by weight, 93 to 99.5 percent by weight, 93 to 99 percent by weight, 93 to 98.5 percent by weight, 94 to 100 percent by weight, 94 to 99.9 percent by weight, 94 to 99.5 percent by weight, 94 to 99 percent by weight, or 94 to 98.5 percent by weight.

In one example of the present invention, when the raw saccharide syrup contains allulose syrup and oligosaccharides, it may include 10 to 80 percent by weight of allulose and 20 to 90 percent by weight of oligosaccharides based on 100 percent by weight of solid content in the raw saccharide syrup, the raw saccharide syrup may include a solid content of 60 to 80 Brix, or 60 Brix to 78 Brix.

The allulose syrup may contain glucose, fructose, disaccharide and saccharides with DP3 or higher in addition to allulose. The allulose syrup can be prepared by various methods, preferably by a biological method, for example, a microbial enzymatic reaction.

For example, the allulose syrup is an allulose-containing mixed saccharides or one obtained therefrom, and the mixed saccharides are the mixed saccharides obtained by reacting an allulose-producing composition including at least one selected from the group consisting of an allulose epimerase, the microbial cells of the strain producing the enzyme, the culture of the strain, the lysate of the strain, and the extract of the culture of the strain, the lysate of the strain, with a fructose-containing raw material, and one obtained from them. Based on 100 parts by weight of the solid content in the mixed saccharides, the mixed saccharides allulose of 2 to 55 parts by weight, fructose of 30 to 80 parts by weight, glucose of 2 to 60 parts by weight and oligosaccharide of 0 to 15 parts by weight. The raw allulose saccharide syrup can be obtained from the mixed saccharides through the separation, and concentration.

As an example for producing allulose in the present invention, an expression system capable of producing an allulose epimerase with high expression rate and stability, a GRAS (Generally recognized as safe) microorganism using the same, and a method of producing allulose using microorganisms, enzymes and the expression system are described in detail in KR 10-1318422B and 10-1656063B.

In the saccharide syrup composition according to the present invention, a predetermined viscosity range can be easily achieved even with a small amount of thickening agent, and the thickening agent may be a mixture of pectin and xanthan gum.

The thickening agent such as pectin tends to have higher solubility and dispersibility as the temperature of the raw saccharide syrup increases. In one example, there is an advantage that the use of dispersing agent can prevent or reduce the undesirable change of saccharide syrup caused by heating.

As a gum with a high thickening effect, xanthan gum achieves high viscosity by absorbing moisture contained in the syrup. However, the viscose property formed by pectin is stretched form which is different from that of saccharide syrup and the original properties of syrup, and thus may adversely affect user convenience and preference. In the case of using xanthan gum alone, it is confirmed that the viscose property is different from that of saccharide syrup, and is not suitable for saccharide syrup.

The thickening agent has a weight ratio of xanthan gum/pectin gum of 0.15 to 1.5, or more preferably 0.2 to 0.8. The higher weight ratio increases the viscosity of saccharide syrup, but tends to lower viscosity preference. Thus, an appropriate numerical range may be selected in consideration of the viscosity strength and preference.

The saccharide syrup composition according to the present invention can achieve a sufficient viscosity range even with a small amount of thickening agent, or preferably, the content of thickening agent may be, based on 100 parts by weight of saccharide syrup composition, 0.03 to 0.099 percent by weight, 0.03 to 0.095 percent by weight, 0.03 to 0.090 percent by weight, 0.03 to 0.085 percent by weight, 0.03 to 0.080 percent by weight, 0.03 to 0.075 percent by weight, 0.03 to 0.070 percent by weight, 0.03 to 0.066 percent by weight, 0.03 to 0.065 percent by weight, 0.03 to 0.064 percent by weight, 0.05 to 0.099 percent by weight, 0.05 to 0.095 percent by weight, 0.05 to 0.090 percent by weight, 0.05 to 0.085 percent by weight, 0.05 to 0.080 percent by weight, 0.05 to 0.075 percent by weight, 0.05 to 0.070 percent by weight, 0.05 to 0.066 percent by weight, 0.05 to 0.065 percent by weight, or 0.05 to 0.064 percent by weight.

According to an embodiment of the present invention, the content of the thickening agent in the saccharide syrup composition including allulose may be, based on 100 parts by weight of the solid content of allulose, 0.03 to 0.099 parts by weight, 0.03 to 0.0985 parts by weight, 0.03 to 0.098 parts by weight, 0.03 to 0.0975 parts by weight, 0.03 to 0.097 parts by weight, 0.03 to 0.0965 parts by weight, 0.03 to 0.096 parts by weight, 0.03 to 0.0955 parts by weight, 0.03 to 0.095 parts by weight, 0.03 to 0.094 parts by weight, 0.03 to 0.093 parts by weight, 0.05 to 0.099 parts by weight, 0.05 to 0.0985 parts by weight, 0.05 to 0.098 parts by weight, 0.05 to 0.0975 parts by weight, 0.05 to 0.097 parts by weight, 0.05 to 0.0965 parts by weight, 0.05 to 0.096 parts by weight, 0.05 to 0.0955 parts by weight, 0.05 to 0.095 parts by weight, 0.05 to 0.094 parts by weight, 0.05 to 0.093 parts by weight, 0.06 to 0.099 parts by weight, 0.06 to 0.0986 parts by weight, 0.06 to 0.098 parts by weight, 0.06 to 0.0975 parts by weight, 0.06 to 0.097 parts by weight, 0.06 to 0.0965 parts by weight, 0.06 to 0.096 parts by weight, 0.06 to 0.0955 parts by weight, 0.06 to 0.095 parts by weight, 0.06 to 0.094 parts by weight, 0.06 to 0.093 parts by weight, 0.065 to 0.099 parts by weight, 0.065 to 0.0985 parts by weight, 0.065 to 0.098 parts by weight, 0.065 to 0.0975 parts by weight, 0.065 to 0.097 parts by weight, 0.065 to 0.0965 parts by weight, 0.065 to 0.096 parts by weight, 0.065 to 0.0955 parts by weight, 0.065 to 0.095 parts by weight, 0.065 to 0.094 parts by weight, 0.065 to 0.093 parts by weight, 0.07 to 0.099 parts by weight, 0.07 to 0.0985 parts by weight, 0.07 to 0.098 parts by weight, 0.07 to 0.0975 parts by weight, 0.07 to 0.097 parts by weight, 0.07 to 0.0965 parts by weight, 0.07 to 0.096 parts by weight, 0.07 to 0.0955 parts by weight, 0.07 to 0.095 parts by weight, 0.07 to 0.094 parts by weight, 0.07 to 0.093 parts by weight, 0.08 to 0.099 parts by weight, 0.08 to 0.0985 parts by weight, 0.08 to 0.098 parts by weight, 0.08 to 0.0975 parts by weight, 0.08 to 0.097 parts by weight, 0.08 to 0.0965 parts by weight, 0.08 to 0.096 parts by weight, 0.08 to 0.0955 parts by weight, 0.08 to 0.095 parts by weight, 0.08 to 0.094 parts by weight, or 0.08 to 0.093 parts by weight.

In the saccharide syrup composition according to the present invention, it is possible to easily achieve a predetermined viscosity range even with a small amount of a thickening agent, and preferably, calcium salts, for example, calcium salts of organic acids may be additionally included. The calcium salts that increase viscosity through crosslinking with pectin can include calcium lactate, calcium citrate, calcium succinate, calcium gluconate, calcium carbonate, calcium chloride and calcium sulfate, preferably calcium lactate, calcium gluconate or calcium citrate, or more preferably, calcium lactate, and one or more of mixture can be used.

The calcium salt of organic acid is 0.001 to 3.0 percent by weight, 0.001 to 2.0 percent by weight, 0.001 to 1.0 percent by weight, 0.001 to 0.5 percent by weight, 0.001 to 0.1 percent by weight, 0.003 to 3.0 percent by weight, 0.003 to 2.0 percent by weight, 0.003 to 1.0 percent by weight, 0.003 to 0.5 percent by weight, 0.003 to 0.1 percent by weight, 0.005 to 3.0 percent by weight, 0.005 to 2.0 percent by weight, 0.005 to 1.0 percent by weight, 0.005 to 0.5 percent by weight, or 0.005 to 0.1 percent by weight, based on 100 percent by weight of the total saccharide syrup composition. The thickening effect according to the calcium lactate content increases up to 0.01 percent by weight based on the total saccharide syrup composition, but when it is added in a larger amount than the range, the viscosity increase rate is not large compared to the added amount.

The saccharide syrup composition according to an embodiment of the present invention may further include a dispersing agent for the thickening agent in order to improve the low dispersibility and solubility of the thickening agent. The content of the dispersing agent in an embodiment of the present invention is 50 to 2,000 parts by weight, 50 to 1,500 parts by weight, 50 to 1,000 parts by weight, 100 to 2,000 parts by weight, 100 to 1,500 parts by weight, and 100 to 1,000 parts by weight, based on 100 part by weight of the thickening agent,

Specific examples of the dispersing agent may be at least one selected from the group consisting of disaccharides, sugar alcohols, and oligosaccharides, preferably oligosaccharides. The dispersing agent is preferably added in the form of a powder. The sugar alcohols may be selected from the group consisting of sorbitol, maltitol, erythritol, xylitol, mannitol, isocitol and lactitol. The oligosaccharides may be at least one selected from the group consisting of galacto-oligosaccharide, malto-oligosaccharide, isomaltooligosaccharide, fructo-oligosaccharide, and soybean oligosaccharide.

In an embodiment of the present invention, the saccharide syrup composition may have a chromaticity of 100 to 500 IU. The chromaticity value range can be controlled by saccharide syrup itself, or by adding one or more chromaticity adjusters selected from the group consisting of sugar cane extract, caramel syrup and synthetic colorant. The content of the added chromaticity adjuster may be included in an appropriate amount in consideration of the chromaticity (IU) of each chromaticity adjuster. For example, the content of the chromaticity adjuster may be 0.0001 to 1.0 percent by weight based on the saccharide syrup composition of 100 percent by weight.

In an embodiment of the present invention, the saccharide syrup composition may further include at least a sweetening material selected from the group consisting of sucralose, Rebaudioside, and stevia extract to control sweetness. The content of the added sweetening material may be included in an appropriate amount, for example, 0.00001 to 5 percent by weight based on the saccharide syrup composition 100 percent by weight, in consideration of the sweetness degree of each sweetening material based on the sweetness degree of sugars.

An embodiment of the present invention relates to a method for controlling the viscosity of a saccharide syrup composition or a method for producing the saccharide syrup composition having a specific viscosity range where the method includes adding and mixing raw saccharide syrup with a thickening agent and a dispersing agent. The thickening agent and the dispersing agent can be added to the raw saccharide syrup after they are first mixed in powdery form to prepare a mixed powder.

In a specific example, increasing a temperature of raw saccharide syrup is more preferable for the dispersion of pectin as a thickening agent. For example, the method may preferably include a step of increasing the temperature to 40 to 95°C, 40 to 90°C, 40 to 85°C, 40 to 80°C, 40 to 75°C, 40 to 70°C, 40 to 65°C, 40 to 60°C, 45 to 95°C, 45 to 90°C, 45 to 85°C, 45 to 80°C, 45 to 75°C, 45 to 70°C, 45 to 65°C, 45 to 60°C, 50 to 95°C, 50 to 90°C, 50 to 85°C, 50 to 80°C, 50 to 75°C, 50 to 70°C, 50 to 65°C, or 50 to 60°C.

In the step of raising the temperature of the raw saccharide syrup, an indirect heating method using steam or hot water is preferable to minimize browning caused by heating of the raw saccharide syrup.

In the step of preparing the mixed powder of the thickening agent and the dispersing agent, any process of mixing powders can be applied to, and preferably, V mixer or a non-gravity mixer can be used.

The step of mixing the mixed powder with the raw saccharide syrup may be performed by adding the mixed powder of the thickening agent and the dispersing agent once, or splitting and adding the mixed powder at several times, when the raw saccharide syrup reaches the desired temperature. The process of adding the mixed powder at several times is a process for efficiently dispersing the mixed powder of thickening agent, and it may be divided and added preferably three or more times. The stirring speed at the process of adding the thickening agent can be 10 to 500 rpm.

Another embodiment of the present invention may be applied as a food, food additive, beverage, or beverage additive by commercializing the saccharide syrup composition itself having a viscosity of 500 to 1,500 mPa.s (cP) measured at 25 °C.

### [Effect of the invention]

The present invention provides a saccharide syrup composition having a specific viscosity range even with including a low content thickening agent, and a manufacturing method thereof, thereby increasing flowability, viscosity degree, and viscosity preference to satisfy consumer convenience and requirements for use, and providing various Applications to food.

### [Brief description of drawings]

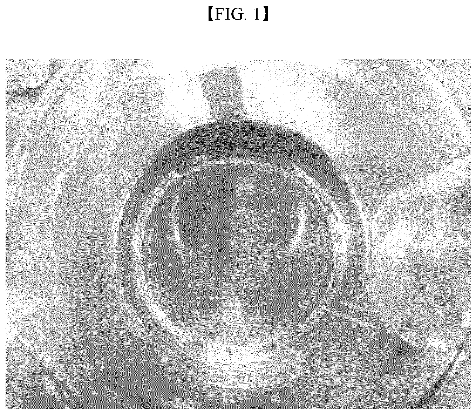

Fig. 1 is a photograph showing the dispersity of saccharide syrup composition according to an embodiment of the present invention.

### [Mode of the invention]

The present invention will be described in more detail with reference to the following examples, but the scope of the present invention is not intended to be limited to the following examples.

### Example 1: Preparation of saccharide syrup composition

The raw allulose syrup composition contained 95 percent by weight of allulose based on 100 percent by weight of the solid content in the composition, and 74 Brix (Bx) of allulose syrup was used. Table 1 below shows the amount (percent by weight) of allulose syrup used to prepare saccharide syrup.

A mixed powder was prepared by homogeneously mixing pectin and xanthan gum and additionally mixing calcium lactate. After raising the temperature of allulose syrup to 55°C, the mixed powder was added and the properties of the syrup were observed while stirring at 60 rpm. After pectin was completely mixed, the syrup was left at room temperature to form a layer, and then homogenized through re-stirring to produce the mixed saccharide syrup with a pH of 4.5.

Based on 100 percent by weight of the total saccharide syrup composition, the amount of allulose syrup, pectin, and xanthan gum was 0.048 percent by weight of pectin, 0.018 percent by weight of xanthan gum, and 0.01 percent by weight of calcium lactate. The pectin (low methoxyl pectin) was manufactured by CPKelco, and the xanthan gum was Fine Grade xanthan gum (Keltrol F) manufactured by CPKelco. The composition of the raw materials except for the allulose syrup is shown in Table 1 below as percent by weight of the solid content.

In order to measure the viscosity of the syrup, 50 mL of the sample was placed in a beaker and measured using a viscosity meter (viscosity spindle 62-Speed 6, Brookfield Engineering Laboratories Inc. USA) at 25° C. The viscosity was 525 mPa.s (cP).

### Example 2: Preparation of saccharide syrup composition

The raw allulose syrup composition was the same as in Example 1, and the content (percent by weight) of allulose syrup used in the preparation of saccharide syrup is shown in Table 2 below.

A mixed powder was prepared by homogeneously mixing pectin, xanthan gum and fructo-oligosaccharide (FOS) and additionally mixing calcium lactate. After raising the temperature of allulose syrup to 55°C, the mixed powder was added and the properties of the syrup were observed while stirring at 60 rpm. After pectin was completely mixed, the syrup was left at room temperature to form a layer, and then homogenized through re-stirring to produce the mixed saccharide syrup. The amounts of allulose syrup, pectin, and xanthan gum are shown in Table 1 below.

In order to measure the viscosity of the syrup, 50 mL of the sample was placed in a beaker and measured using a viscosity meter (viscosity spindle 62-Speed 6, Brookfield Engineering Laboratories Inc. USA) at 25° C. The composition of the raw materials except for the allulose syrup is shown in Table 2 below as percent by weight of solid content. The viscosity measurement results are shown in Table 2 below.

**[Table 1]**

| Item | Sample 2-1 | Sample2-2 | Sample2-3 | Sample2-4 | Sample2-5 |
|---|---|---|---|---|---|
| Pectin | 0.08 | 0.06 | 0.05 | 0.04 | 0.03 |
| xanthan gum | 0.014 | 0.01 | 0.02 | 0.03 | 0.04 |
| FOS | 0.35 | 0.4 | 0.4 | 0.4 | 0.4 |
| allulose syrup | 99.556 | 99.53 | 99.53 | 99.53 | 99.53 |
| Sum | 100 | 100 | 100 | 100 | 100 |
| Weight ratio of xanthan gum/pectin | 0.18 | 0.17 | 0.40 | 0.75 | 1.33 |
| viscosity(cps) | 695 | 650 | 775 | 860 | 945 |

**[Table 2]**

| Item | Sample2-6 | Sample2-7 | Sample2-8 | Sample2-9 | Sample2-10 |
|---|---|---|---|---|---|
| Pectin | 0.05 | 0.048 | 0.046 | 0.044 | 0.048 |
| xanthan gum | 0.016 | 0.018 | 0.02 | 0.022 | 0.018 |
| FOS | 0.4 | 0.4 | 0.4 | 0.4 | 0.4 |
| allulose syrup | 99.534 | 99.534 | 99.534 | 99.534 | 99.534 |
| Sum | 100 | 100 | 100 | 100 | 100 |
| Weight ratio of xanthan gum/pectin | 0.32 | 0.37 | 0.43 | 0.50 | 0.37 |
| viscosity(cps) | 510 | 580 | 675 | 715 | 575 |

The viscosity of the syrup increased as the content of xanthan gum to pectin was deceased, and increased in proportion to the total amount of thickening agent.

### Example 3: Preparation of saccharide syrup composition

### (1) Saccharide syrup production

The raw allulose syrup composition was the same as in Example 1, and the content (percent by weight) of allulose syrup used in the preparation of saccharide syrup is shown in Table 3 below.

A mixed powder was prepared by homogeneously mixing pectin, xanthan gum fructo-oligosaccharide (FOS) and calcium lactate powder. After raising the temperature of allulose syrup to 55°C, the mixed powder was added and the properties of the syrup were observed while stirring at 60 rpm. After pectin was completely mixed, the syrup was left at room temperature to form a layer, and then homogenized through re-stirring to produce the mixed saccharide syrup. The amounts (percent by weight) of allulose syrup, pectin, and xanthan gum are shown in Table 3 below.

### (2) Viscosity measurement

In order to measure the viscosity of the syrup, 50 mL of the sample was placed in a beaker and measured using a viscosity meter (viscosity spindle 62-Speed 6, Brookfield Engineering Laboratories Inc. USA) at 25° C.

In addition, after preparing Sample 3-9, it was cooled to 45° C, and a photograph of saccharide syrup was shown in FIG. 1. As shown in Fig. 1, in order to evaluate the dispersibility and the solubility of the thickening agent in saccharide syrup, the thickening agent was well dispersed in Sample 3-9 without clumping in the saccharide syrup. It was confirmed that the dispersion of the thickening agent was improved when fructo-oligosaccharide was included. Table 3 and Table 4 show the composition of raw material (unit: percent by weight) and viscosity.

**[Table 3]**

| Item | Sample3-1 | Sample3-2 | Sample3-3 | Sample3-4 | Sample3-5 |
|---|---|---|---|---|---|
| Pectin | 0.05 | 0.05 | 0.05 | 0.05 | 0.05 |
| xanthan gum | 0.02 | 0.02 | 0.02 | 0.016 | 0.016 |
| FOS | 0.4 | 0.4 | 0.4 | 0.4 | 0.4 |
| calcium lactate | 0.02 | 0.04 | 0.06 | 0.005 | 0.01 |
| allulose syrup | 99.51 | 99.49 | 99.47 | 99.529 | 99.524 |
| Sum | 100 | 100 | 100 | 100 | 100 |
| Weight ratio of xanthan gum/pectin | 0.40 | 0.40 | 0.40 | 0.32 | 0.32 |
| viscosity(cps) | 805 | 820 | 810 | 550 | 570 |

**[Table 4]**

| Item | Sample 3-6 | Sample 3-7 | Sample 3-8 | Sample 3-9 | Sample 3-10 | Sample 3-11 |
|---|---|---|---|---|---|---|
| Pectin | 0.05 | 0.05 | 0.048 | 0.048 | 0.048 | 0.048 |
| xanthan gum | 0.016 | 0.016 | 0.018 | 0.018 | 0.018 | 0.018 |
| FOS | 0.4 | 0.4 | 0.4 | 0.4 | 0.4 | 0.4 |
| calcium lactate | 0.015 | 0.02 | 0.005 | 0.01 | 0.015 | 0.02 |
| allulose syrup | 99.519 | 99.514 | 99.529 | 99.524 | 99.519 | 99.514 |
| Sum | 100 | 100 | 100 | 100 | 100 | 100 |
| Weight ratio of xanthan gum/pectin | 0.32 | 0.32 | 0.38 | 0.38 | 0.38 | 0.38 |
| Weight ratio of calcium lactate/pectin | 0.30 | 0.40 | 0.10 | 0.21 | 0.31 | 0.42 |
| viscosity(cps) | 560 | 575 | 635 | 650 | 650 | 665 |

As shown in the viscosity measurement results of Table 4, in the viscosity measurement results of Samples 3-6 and 3-7 and Samples 3-8 to 3-11, the viscosity increased as the amount of calcium lactate increased within a certain amount of use, which showed the effect of calcium ions on the cross-linking of pectin. In addition, when the pectin content in the saccharide syrup is the same, the thickening effect caused by the calcium lactate content effect was increased, when the calcium lactate content increased up to 0.01 percent by weight based on the total saccharide syrup composition. When the calcium lactate content was higher than the range, the viscosity increase rate is not large compared to the amount added.

### Comparative Example 1: Preparation of saccharide syrup

The saccharide syrup was prepared according to the same method and components as those of Example 2, except that 0.66 percent by weight of pectin and fructo-oligosaccharide powder without xanthan gum were homogeneously mixed to prepare a mixed powder, and dissolved in allulose syrup to prepare saccharide syrup. The viscosity was measured.

### Comparative Example 2: Preparation of saccharide syrup

The saccharide syrup was prepared according to the same method and components as those of Example 3, except that 0.66 percent by weight of xanthan gum, 0.1 percent by weight of calcium lactate and 0.4 percent by weight of fructooligosaccharide powder without pectin were homogeneously mixed to prepare a mixed powder, and dissolved in allulose syrup to prepare saccharide syrup. The viscosity was measured.

### Comparative Example 3: Preparation of saccharide syrup

The saccharide syrup was prepared according to the same method and components as those of Example 2, except that 0.08 percent by weight of pectin, 0.014 percent by weight of carrageenan, 0.35 percent by weight of fructo-oligosaccharide powder without xanthan gum were homogeneously mixed to prepare a mixed powder, and dissolved in allulose syrup to prepare saccharide syrup. The viscosity was measured.

**[Table 5]**

| component | Comparative Example 1 | Comparative Example 2 | Comparative Example 3 |
|---|---|---|---|
| pectin | 0.066 | 0 | 0.08 |
| xanthan gum | 0 | 0.066 | 0 |
| carrageenan | 0 | 0 | 0.014 |
| FOS | 0.4 | 0.4 | 0.35 |
| calcium lactate | 0 | 0.01 | 0 |
| allulose syrup | 99.534 | 99.524 | 99.556 |
| Sum | 100 | 100 | 100 |
| viscosity (cps) | 300 | 975 | 465 |

As shown in Table 5 above, saccharide syrup using pectin 0.066 percent by weight alone (Comparative Example 1) and saccharide syrup using a mixture of pectin and carrageenan (Comparative Example 3) could not satisfy the prescribed viscosity condition. In the case of saccharide syrup using xanthan gum alone (Comparative Example 2), the viscosity increased, but the sensory preference of saccharide syrup decreased.

### Test Example 2: Sensory evaluation of saccharide syrup

### (1) Evaluation of viscosity degree

15 ml of the prepared saccharide syrup was put in the mouth to stimulate the oral epidermis evenly for 20 seconds, and then was spit out. Each time the first evaluation of the sample was completed, the mouth was washed with water and the next sample was evaluated after 10 minutes had elapsed. The sensory elements were evaluated on a 5-point box scale. In order to examine the effect on the sensory characteristics of the syrup, the temperature of all samples used for sensory evaluation was prepared to be room temperature. The sensory evaluation personnel consisted of 12 panelists who were trained on taste and flavor evaluation, and scored the evaluation results on a 5-point scale.

A five-point scale for viscosity strength was set as 1 point for very weak, 2 points for weak, 3 points for moderate, 4 points for strong, and 5 points for very strong. Table 6 below shows the evaluation results of 12 panelists for the sensory evaluation of viscosity degree and the average value of evaluation values.

### (2)Evaluation of viscosity preference

This was performed using the same sensory evaluation panel and method as the viscosity degree, and a 5-point box scale for viscosity preference was set to 1 point for very bad, 2 points for bad, 3 points for moderate, 4 points for good, and 5 points very good. Table 6 below shows the evaluation results of 12 panelists for the sensory evaluation of viscosity preference and the average value of evaluation values.

**[Table 6]**

| Item | Viscosity degree | | Viscosity preference | |
|---|---|---|---|---|
| | Sample3-9 | Comparative Example 2 | Sample3-9 | Comparative Example 2 |
| Average | 2.83 | 4.17 | 3.83 | 2.33 |

As shown in Table 6, the sensory evaluation of viscosity strength showed that the single use of xanthan gum alone was strong for the viscosity strength. The sensory evaluation for the viscosity preference was good at 3.83 when a mixture of pectin and xanthan gum was used, but it was low at 2.33 for xanthan gum alone. Therefore, as in Comparative Example 2, when xanthan gum was used alone, it was confirmed that it had different viscous characteristics from that of the saccharide syrup, and showed the viscose property not being suitable for saccharide syrup.

### Example 5: Evaluation of storage stability for saccharide syrup

While Sample 3-9 prepared in Example 3 and Comparative Sample prepared in Comparative Example 1 were put into a container, sealed, and stored at a temperature of 45°C, and the allulose content in the mixed saccharide syrup was analyzed at the beginning point of the storage stability test (week 0), week 1, and week 2 by HPLC.

Under the condition of the Carbohydrate analysis column (Bio-rad Aminex (trade name) HPX-87C), and water at 80 ° C as a mobile phase, HPLC was analyzed using a high-performance liquid chromatography (HPLC, Agilent Corporation).

The content (percent by weight) of allulose syrup in the sample measured at the initial point of the storage stability test was 95.91 percent by weight for Samples 3-9 and 97.64 percent by weight for Comparative Example 1 based on 100 percent by weight of the saccharide syrup composition, and the reduced content of allulose (difference in percent by weight of allulose) measured at week 1 and week 2 are shown in Table 7 below.

**[Table 7]**

| Storage time | Sample 3-9 of Example 3 | Comparative Example 1 |
|---|---|---|
| 0 | 0.00 | 0.00 |
| 1 week | 2.22 | 3.94 |
| 2 weeks | 3.90 | 6.44 |

As a result of analyzing the allulose content in syrup using LC, when stored under severe conditions at 45°C, the decrease in allulose content in Sample 3-9 of the present invention was small, and the decrease in allulose was large in Comparative Example 1 using only pectin as a thickening agent which showed low storage stability. In addition, when calcium lactate was included in the sample of the present invention, the desired viscosity range was achieved by increasing the degree of crosslinking of pectin, and calcium lactate was more preferably served as a pH buffer in the syrup to slow the pH drop and slow down the decomposition of allulose.

## Claims

1. A saccharide syrup composition comprising allulose and thickening agent, wherein the thickening agent comprises pectin and xanthan gum at an amount of 0.03 to 0.099 percent by weight, based on 100 percent by weight of the saccharide syrup composition, wherein the weight ratio of xanthan gum to pectin (=xanthan gum/pectin) is 0.15 to 1.5, and wherein the viscosity of the saccharide syrup composition is 500 to 3,000 mPa.s (cP) as measured at 25°C.

2. The saccharide syrup composition according to claim 1, wherein the saccharide syrup composition further comprises calcium salts of organic acids.

3. The saccharide syrup composition according to claim 2, wherein the calcium salts of organic acids is at least one selected from the group consisting of calcium lactate, calcium citrate, calcium succinate, calcium gluconate, and calcium carbonate.

4. The saccharide syrup composition according to claim 2, wherein the calcium salts of organic acids is included at an amount of 0.001 to 3.0 percent by weight, based on 100 percent by weight of the saccharide syrup composition.

5. The saccharide syrup composition according to claim 1, wherein the saccharide syrup composition further comprises at least one selected from the group consisting of sucrose, fructooligosaccharide and isomaltooligosaccharide at an amount of 50 to 2,000 parts by weight, based on 100 parts by weight of the thickening agent.

6. The saccharide syrup composition according to claim 1, wherein the thickening agent is included at an amount of 0.03 to 0.064 percent by weight, based on 100 percent by weight of the saccharide syrup composition.

7. The saccharide syrup composition according to claim 1, wherein the allulose is included at an amount of 50 to 80 percent by weight, based on 100 percent by weight of the saccharide syrup composition.

8. The saccharide syrup composition according to claim 1, wherein the allulose is syrup, crystalline powder, or amorphous powder.

9. The saccharide syrup composition according to claim 1, wherein the allulose is provided with allulose syrup which further comprises at least one selected from the group consisting of fructose, glucose, and oligosaccharide.

10. The saccharide syrup composition according to claim 1, wherein the thickening agent is included at an amount of 0.03 to 0.099 parts by weight, based on 100 parts by weight of the solid content of allulose.

11. The saccharide syrup composition according to claim 1, wherein the saccharide syrup composition further comprises a high-intensity sweetener.

12. The saccharide syrup composition according to claim 1, wherein the chromaticity of saccharide syrup composition is 100 to 500 IU.

13. The saccharide syrup composition according to claim 1, wherein the saccharide syrup composition further comprises at least one chromaticity adjuster selected from the group consisting of a sugar cane extract, caramel syrup and synthetic colorant.

14. A method of preparing the saccharide syrup composition as defined in claim 1, comprising the steps of
raising a temperature of allulose syrup as a raw saccharide syrup to 40-95 °C, and
adding and dispersing a mixed powder of pectin and xanthan gum to the heated raw saccharide syrup.

## Patentansprüche

1. Saccharidsirup-Zusammensetzung, die Allulose und Verdickungsmittel umfasst, wobei das Verdickungsmittel Pektin und Xanthangummi in einer Menge von 0,03 bis 0,099 Gewichtsprozent, bezogen auf 100 Gewichtsprozent der Saccharidsirup-Zusammensetzung, umfasst, wobei das Gewichtsverhältnis von Xanthangummi zu Pektin (=Xanthangummi/Pektin) 0,15 bis 1,5 beträgt und wobei die Viskosität der Saccharidsirup-Zusammensetzung 500 bis 3000 mPa·s (cP), gemessen bei 25 °C, beträgt.

2. Saccharidsirup-Zusammensetzung gemäß Anspruch 1, wobei die Saccharidsirup-Zusammensetzung des Weiteren Calciumsalze organischer Säuren umfasst.

3. Saccharidsirup-Zusammensetzung gemäß Anspruch 2, wobei die Calciumsalze organischer Säuren mindestens eines sind, das aus der Gruppe ausgewählt ist, die aus Calciumlactat, Calciumcitrat, Calciumsuccinat, Calciumgluconat und Calciumcarbonat besteht.

4. Saccharidsirup-Zusammensetzung gemäß Anspruch 2, wobei die Calciumssalze von organischen Säuren in einer Menge von 0,001 bis 3,0 Gewichtsprozent, bezogen auf 100 Gewichtsprozent der Saccharidsirup-Zusammensetzung, enthalten sind.

5. Saccharidsirup-Zusammensetzung gemäß Anspruch 1, wobei die Saccharidsirup-Zusammensetzung ferner mindestens eine (Verbindung) umfasst, die aus der Gruppe ausgewählt ist, die aus Saccharose, Fructooligosaccharid und Isomaltooligosaccharid in einer Menge von 50 bis 2000 Gewichtsteilen, bezogen auf 100 Gewichtsteile des Verdickungsmittels, besteht.

6. Saccharidsirup-Zusammensetzung gemäß Anspruch 1, wobei das Verdickungsmittel in einer Menge von 0,03 bis 0,064 Gewichtsprozent, bezogen auf 100 Gewichtsprozent der Saccharidsirup-Zusammensetzung, enthalten ist.

7. Saccharidsirup-Zusammensetzung gemäß Anspruch 1, wobei die Allulose in einer Menge von 50 bis 80 Gewichtsprozent, bezogen auf 100 Gewichtsprozent der Saccharidsirup-Zusammensetzung, enthalten ist.

8. Saccharidsirup-Zusammensetzung gemäß Anspruch 1, wobei die Allulose ein Sirup, ein kristallines Pulver oder ein amorphes Pulver ist.

9. Saccharidsirup-Zusammensetzung gemäß Anspruch 1, wobei die Allulose mit Allulosesirup bereitgestellt ist, der des Weiteren mindestens eine (Verbindung) umfasst, die aus der Gruppe ausgewählt ist, die aus Fructose, Glucose und Oligosaccharid besteht.

10. Saccharidsirup-Zusammensetzung gemäß Anspruch 1, wobei das Verdickungsmittel in einer Menge von 0,03 bis 0,099 Gewichtsteilen, bezogen auf 100 Gewichtsteile des Feststoffgehalts an Allulose, enthalten ist.

11. Saccharidsirup-Zusammensetzung gemäß Anspruch 1, wobei die Saccharidsirup-Zusammensetzung ferner ein Süßungsmittel hoher Intensität umfasst.

12. Saccharidsirup-Zusammensetzung gemäß Anspruch 1, wobei die Chromatizität der Saccharidsirup-Zusammensetzung 100 bis 500 IU beträgt.

13. Saccharidsirup-Zusammensetzung gemäß Anspruch 1, wobei die Saccharidsirup-Zusammensetzung ferner mindestens ein die Chromatizität einstellendes Mittel umfasst, das aus der Gruppe ausgewählt ist, die aus Zuckerrohrextrakt, Karamellsirup und synthetischem Farbstoff besteht.

14. Verfahren zur Herstellung einer Saccharidsirup-Zusammensetzung gemäß Definition in Anspruch 1, das die folgenden Schritte umfasst:
Erhöhen der Temperatur des Allulosesirups als Rohsaccharidsirup auf 40-95 °C und
Hinzufügen und Dispergieren eines gemischten Pulvers von Pektin und Xanthangummi zu dem erwärmten Rohsaccharidsirup.

## Revendications

1. Composition de sirop de saccharide comprenant de l'allulose et un agent épaississant, dans laquelle l'agent épaississant comprend de la pectine et de la gomme xanthane en une quantité de 0,03 à 0,099 pour cent en poids, sur la base de 100 pour cent en poids de la composition de sirop de saccharide, dans laquelle le rapport pondéral gomme xanthane sur la pectine (= gomme xanthane/pectine) est de 0,15 à 1,5, et dans laquelle la viscosité de la composition de sirop de saccharide est de 500 à 3 000 mPa.s (cP), telle que mesurée à 25 °C.

2. Composition de sirop de saccharide selon la revendication 1, dans laquelle la composition de sirop de saccharide comprend en outre des sels de calcium d'acides organiques.

3. Composition de sirop de saccharide selon la revendication 2, dans laquelle les sels de calcium d'acides organiques est au moins un sel choisi dans le groupe constitué du lactate de calcium, du citrate de calcium, du succinate de calcium, du gluconate de calcium et du carbonate de calcium.

4. Composition de sirop de saccharide selon la revendication 2, dans laquelle les sels de calcium d'acides organiques est inclus en une quantité de 0,001 à 3,0 pour cent en poids, sur la base de 100 pour cent en poids de la composition de sirop de saccharide.

5. Composition de sirop de saccharide selon la revendication 1, dans laquelle la composition de sirop de saccharide comprend en outre au moins un élément sélectionné dans le groupe constitué du saccharose, d'un fructooligosaccharide et d'un isomaltooligosaccharide en une quantité de 50 à 2 000 parties en poids, sur la base de 100 parties en poids de l'agent épaississant.

6. Composition de sirop de saccharide selon la revendication 1, dans laquelle l'agent épaississant est inclus en une quantité de 0,03 à 0,064 pour cent en poids, sur la base de 100 pour cent en poids de la composition de sirop de saccharide.

7. Composition de sirop de saccharide selon la revendication 1, dans laquelle l'allulose est inclus en une quantité de 50 à 80 pour cent en poids, sur la base de 100 pour cent en poids de la composition de sirop de saccharide.

8. Composition de sirop de saccharide selon la revendication 1, dans laquelle l'allulose est un sirop, une poudre cristalline ou une poudre amorphe.

9. Composition de sirop de saccharide selon la revendication 1, dans laquelle l'allulose est fourni avec un sirop d'allulose qui comprend en outre au moins un élément sélectionné dans le groupe constitué du fructose, du glucose et d'un oligosaccharide.

10. Composition de sirop de saccharide selon la revendication 1, dans laquelle l'agent épaississant est inclus en une quantité de 0,03 à 0,099 partie en poids, sur la base de 100 parties en poids de la teneur en matières solides d'allulose.

11. Composition de sirop de saccharide selon la revendication 1, dans laquelle la composition de sirop de saccharide comprend en outre un édulcorant de haute intensité.

12. Composition de sirop de saccharide selon la revendication 1, dans laquelle la chromaticité de la composition de sirop de saccharide est de 100 à 500 Ul.

13. Composition de sirop de saccharide selon la revendication 1, dans laquelle la composition de sirop de saccharide comprend en outre au moins un ajusteur de chromaticité sélectionné dans le groupe constitué d'un extrait de canne à sucre, d'un sirop de caramel et d'un colorant synthétique.

14. Procédé de préparation de la composition de sirop de saccharide telle que définie dans la revendication 1, comprenant les étapes consistant à
faire monter une température de sirop d'allulose sous forme de sirop de saccharide brut à 40 à 95 °C, et
ajouter et disperser une poudre mixte de pectine et de gomme xanthane dans le sirop de saccharide brut chauffé.
